# EUROPEAN PATENT SPECIFICATION

(11) **EP 4 659 111 B1**
(45) Date of publication and mention of the grant of the patent: **07.10.2026**
(21) Application number: 23724797.8
(22) Date of filing: 04.05.2023
(51) Int. Cl.: G06F 12/02

(54) **SCATTERED UPDATE OF A FLASH MEMORY**
VERSTREUTE AKTUALISIERUNG EINES FLASH-SPEICHERS
MISE À JOUR DIFFUSÉE D'UNE MÉMOIRE FLASH

(43) Date of publication of application: 10.12.2025
(73) Proprietor: Huawei Technologies Co., Ltd., Shenzhen, Guangdong 518129 (CN)
(72) Inventor: UHRENFELDT, Henrik, 16440 Kista (SE); GJORUP, Karsten, 16440 Kista (SE)
(74) Representative: Gill Jennings & Every LLP
(86) International application number: PCT/EP2023/061857
(87) International publication number: WO 2024/227516

(56) References cited:
- WO-A1-2017/007487
- US-A1- 2013 166 820
- US-A1- 2019 073 141
- US-A1- 2019 347 191

## Description

### TECHNICAL FIELD

Embodiments of the invention relate an electric storage system configured to control a flash memory. Furthermore, embodiments of the invention also relate to an embedded device comprising the electric storage system, and also to corresponding methods and a computer program.

### BACKGROUND

Embedded devices comprising at least a processing arrangement and a memory are commonly used today. The embedded devices may, for example, have a dedicated functionality within a larger mechanical and/or electronic system. The embedded devices are used in an increasing number of technical fields and applications, and are also becoming more and more complex. In many technical fields and applications, the lifetime and robustness of the embedded devices are important parameters.

For example, embedded devices are widely used in the automotive industry. The embedded devices should here be robust, such that they are able to perform under varying conditions, and should be designed for a long-time usage, since vehicles as such have a long lifetime.

The memories used in embedded devices are often non-volatile memories, such as for example flash memories. Flash memories can keep stored data also when there is no supplied power, such that the stored data may be retained after power is supplied again. Flash memories can be electrically erased and reprogrammed. A limitation of flash memories, however, is that they have a finite lifetime, which is related to a finite number of possible erase and reprogram cycles of the flash memories. Thus, each erase and reprogram cycle causes wear of the flash memory, and after a certain number of performed erase and reprogram cycles, the function of the flash memory deteriorates or is lost.

A high density flash memory may be utilized in order to increase the lifetime of the memory. However, high density flash memories are more expensive than low density flash memories. The memory wear due to erase and reprogramming therefore imposes a conflict between lifetime and cost for the flash memory, and thus for the embedded device as a whole, since both a low cost and a long lifetime are desirable.

US 2019/347191 A1 discloses a method of maintaining, on a storage unit, mapping data between a first set of logical addresses (e.g., logical block addresses or LBAs) viewed by a host and a first set of physical addresses ( e.g., physical block addresses or PBAs) and a second set of physical addresses of the storage unit. A first logical address ( e.g., LBA) of the first set of logical addresses corresponds to a first physical address (e.g., PBA) of the first set of physical addresses that maintains current data for the first logical address. The first logical address further corresponds to a second physical address (e.g., PBA) of the second set of physical addresses that maintains prior data for the first logical address. The method further comprises receiving, at the storage unit, a command from the host to perform a multi-device operation involving the first logical address. The operation is performed atomically.

US 2013/166820 A1 discloses a method and apparatus for storing data packets in two different logical erase blocks pursuant to an atomic storage request. Each data packet stored in response to the atomic storage request comprises persistent metadata indicating that the data packet pertains to an atomic storage request. In addition, a method and apparatus for restart recovery is disclosed. A data packet preceding an append point is identified as satisfying a failed atomic write criteria, indicating that the data packet pertains to a failed atomic storage request. One or more data packets associated with the failed atomic storage request are identified and excluded from an index of a non-volatile storage media.

WO2017/007487 A1 discloses example embodiments of a memory module having a plurality of non-volatile memory dies and a media controller to mirror data independent of a computing system. For example, the media controller may receive data from the computing system, may store the data to a die of a first subset of the non-volatile memory dies, and may mirror the data to a die of a second subset of the non-volatile memory dies. The media controller may mirror the data according to a preprogrammed mirroring scheme. The second subset of the non-volatile memory dies may be unaddressable by the computing system.

US 2019/073141 A1 discloses methods, apparatus and products for converting RAID data between persistent storage types, including: for each portion of a RAID shard of a RAID stripe: writing, to a respective plurality of source solid state drives, the portion of the RAID shard; detecting that all portions of the RAID shard have been successfully written; copying, from one of the plurality of source solid state drives to a respective target solid state drive among a plurality of target solid state drives from one of the plurality of source solid state drives, the RAID shard, where the RAID shard is copied from a source solid state drive that is different from where each other RAID shard of the RAID stripe is copied from.

### SUMMARY

The invention is defined in the appended claims. The dependent claims set out particular embodiments. An objective of embodiments of the invention is to provide a solution which mitigates or solves the drawbacks and problems of conventional solutions.

Another objective of embodiments of the invention is to provide a solution providing an improved flash memory lifetime.

The above and further objectives are solved by the subject matter of the independent claims. Further embodiments of the invention can be found in the dependent claims.

According to a first aspect of the invention, the above mentioned and other objectives are achieved with an electronic storage system for controlling a flash memory, the electronic storage system being configured to:
receive an update request associated with at least a first data portion stored in a first block of the flash memory and a second data portion stored in a second block of the flash memory; and
update, based on the update request, the first data portion stored in the first block and the second data portion stored in the second block in a single storage system operation, without updating data portions stored in one or more blocks in between the first block and the second block.

An advantage with this implementation form is that the lifetime of the flash memory is extended. The electronic storage system is provided with information about which data portions that are to be updated with modified data, and the electronic storage system can then perform the update of these data portions without updating non-modified data portions in blocks between the blocks written with modified data. In the situation where scattered data portions are updated, the implementation form gives a significant reduction of write amplification, which improves the flash memory lifetime.

The amount of physical flash memory writing is hereby more aligned with the actual need for data portion updates than for conventional solutions. Thus, less data portions are rewritten with non-updated data, which reduces the write amplification compared to conventional solutions. Since flash memories have a finite lifetime, being related to a finite number of possible erase and reprogram cycles, the reduced write amplification results in an improved lifetime of the flash memory. The improved lifetime also results in that low density flash memories may be used for more applications, which reduces the flash memory costs.

In an implementation form of an electronic storage system according to the first aspect, the first data portion and the second data portion comprise interdependent information.

When the data in non-continuous blocks is interdependent, the storage system operation cannot be split into two storage system requests. This is due to the data interdependency, which might impact the functionality of, or give side effects for, the stored data object. As examples of such data interdependency, the second data portion may comprise a checksum covering also the first portion, or may comprise a password associated with a user name comprised in the first data portion. An advantage with this implementation form is that data portions in blocks in between the first block and the second block may be left without update, which provides for a minimized write amplification also for interrelated information in scattered blocks.

In an implementation form of an electronic storage system according to the first aspect, the electronic storage system is configured to:
receive the update request in one storage system interface call from an application.

An advantage with this implementation form is that the update request is completed with only one storage system interface call, which reduces signaling in the embedded device. Another advantage is that the electronic storage system receives pointers to all data portions to be updated in one function call, which means that the electronic storage system can directly use buffers of the electronic storage system as source buffers when writing to the flash memory. This can potentially remove an additional data copying procedure, which will speed up the electronic storage system.

In an implementation form of an electronic storage system according to the first aspect, the electronic storage system is configured to:
receive the update request in two or more storage system interface calls from an application.

An advantage with this implementation form is that the update request may be compiled by multiple storage system interface calls before the actual flash memory update is executed. This sequence of two or more storage interface calls enables use of a conventional interface comprising only one data pointer. A specific event might then trigger the electronic storage system to flush the aggregated data to the flash memory.

In the present invention, the electronic storage system is configured to store data portions of a data object in multiple blocks of the flash memory;
the first data portion is a first data portion of the data object; and
the second data portion is a second data portion of the data object.

An advantage with this implementation form is that the data portion updates herein presented are usable for updating a data object of a lower layer storage system, where multiple data portions of the data object are stored in the flash memory. Hereby, data object portions stored in multiple scattered blocks may be simultaneously updated, which causes minimal write amplification and extends the flash memory lifetime.

In an implementation form of an electronic storage system according to the first aspect, the electronic storage system comprises a file system, the file system being configured to utilize a data area and a file table of the flash memory, the file table comprising multiple table entries, each table entry being associated with a memory cluster of the data area in which a data portion of a data file is stored;
the first data portion is a first data portion of the data file; and
the second data portion is a second data portion of the data file.

Data portions of the data file stored in multiple non-continuous memory clusters may hereby be updated while data portions stored in memory clusters in between are left without update, which minimizes write amplification and improves the flash memory lifetime. Also, the file system makes it possible to combine sections of scattered data area memory clusters into one continuous storage object.

In an implementation form of an electronic storage system according to the first aspect, the update request indicates an update of the data file, the electronic storage system being configured to:
write updated data portions of the data file in two or more memory clusters previously being unallocated; and
activate the updated data portions by updating values of table entries such that the data file comprises the updated data portions, wherein at least two of the values of the table entries are updated in a single flash memory operation.

An advantage with this implementation form is that the update of the values of the table entries activates the updated portions of the data file in one single flash memory operation, which completes a robust power loss proof update of the data file, while still minimizing write amplification. The update of the file table, which causes a switch from original data portions to newly updated data portions of the data file, is useful when the data portions to be updated are stored in non-continuous memory clusters, since the switch ensures that there is no risk for an only partially updated data file being retained after a sudden power loss. Thus, data portions of a data file stored in non-contiguous memory clusters may hereby be safely updated in a robust power loss proof manner.

In this document, a power loss proof update is an update after which a completely updated data file is available for retrieval and/or the original data object is available for retrieval. Thus, there is always a completely updated version and/or a non-updated version of the data file available, also if there is a loss in power, i.e. an unexpected power failure, during the update as such. In other words, after a power loss proof update, there is not only a data file available which has been partially updated such that it comprises a mix of old and updated data. The electrical storage system may thus be defined as power loss proof if a storage system request is either fully executed or not executed at all.

In an implementation form of an electronic storage system according to the first aspect, the electronic storage system comprises a storage system interface, the storage system interface comprising a first pointer to the first block and a second pointer to the second block.

An advantage with this implementation form is that multiple data portions stored in non-contiguous blocks can be pointed to together, which makes it possible for the electronic storage system to perform a power loss proof update in the most efficient manner, thereby extending the flash memory lifetime and providing a robust flash memory. The storage system interface is usable for both lower layer storage systems and for higher layer file systems.

In an implementation form of an electronic storage system according to the first aspect, each one of the first block and the second block is an erase block, the erase block comprising one or more erasable entities of the flash memory and comprising one or more write sectors, each write sector being a smallest writable entity of the flash memory.

An advantage with this implementation form is that the electronic storage system is flexible and can be adapted to different physical flash memory devices. Hereby, a more generic and well-proven electronic storage system may be provided, which also benefits from an improved flash memory lifetime

In an implementation form of an electronic storage system according to the first aspect, the flash memory comprises a set of primary erase blocks and a set of backup erase blocks; and the electronic storage system is configured to:
store a primary version of the first data portion in a first primary erase block;
store a primary version of the second data portion in a second primary erase block, the first primary erase block and the second primary erase block being non-contiguous erase blocks;
store a backup version of the first data portion in a first backup erase block; and
store a backup version of the second data portion in a second backup erase block, the first backup erase block and the second backup erase block being non-contiguous erase blocks.

An advantage with this implementation form is that two copies of the data object, a primary version and a backup version, are stored linearly in the flash memory. Hereby, power loss proof updates are made possible, since there will be possible to retain either a valid original sequence of data portions and/or a valid updated sequence of data portions after a power loss. Also, since the herein presented targeted update of data portions stored in scattered blocks is applied, write amplification is minimized for the update.

In an implementation form of an electronic storage system according to the first aspect, the electronic storage system is configured to:
erase the backup version of the first data portion and the backup version of the second data portion;
write an updated backup version of the first data portion in a write sector of the first backup erase block, and an updated backup version of the second data portion in a write sector of the second backup erase block;
erase the primary version of the first data portion and the primary version of the second data portion;
copy the updated backup version of the first data portion from the first backup erase block to a write sector of the first primary erase block as an updated primary version of the first data portion, and the updated backup version of the second data portion from the second backup erase block to a write sector of the second primary erase block as an updated primary version of the second data portion.

An advantage with this implementation form is that power loss proof updates are provided by this update sequence, since there is always a valid original sequence of data portions and/or a valid updated sequence of data portions available to read. Also, data portions stored in scattered blocks for which there is new data are updated, but data portions in other blocks in between those scattered blocks are left without update. Hereby, write amplification is minimized, and flash lifetime is improved.

In an implementation form of an electronic storage system according to the first aspect,
the update comprises an update of data portions stored in two or more blocks of the flash memory, including the first block and the second block, in the single storage system operation; such that
the update of the data portions stored in the two or more blocks is performed in a power loss proof way.

An advantage with this implementation form is that a robust flash memory is provided, since multiple data portions stored in multiple blocks in the flash memory, where at least some of the blocks are scattered, may be updated in a power loss way. Hereby, although a non-regular power loss occurs during an update, there is always a sequence of valid original data portions available and/or a sequence of valid updated data portions available, such that the data object or data file can be restored after an unexpected power interruption.

In an implementation form of an electronic storage system according to the first aspect, the electronic storage system is configured to:
level a number of erases across blocks of the flash memory.

An advantage with this implementation form is that no single block reaches its end of life stage and starts malfunctioning long before the other blocks reach their end of life stages. Hereby, the lifetime of the flash memory is extended because no single block will prevent the system from functioning correctly. In that way, the lifetime of the entire electronic storage system is improved.

In an implementation form of an electronic storage system according to the first aspect, the electronic storage system is configured to:
write updated data portions in multiple write sectors of an erase block of the flash memory before erasing the erase block.

An advantage with this implementation is that multiple sector updates can be performed within the same erase block of the flash memory before a physical erase is required for the erase block. Hereby, a smaller data update granularity is provided, and the number of physical erases is also reduced. This in total results in a longer lifetime for the flash memory.

In an implementation form of an electronic storage system according to the first aspect, the electronic storage system is configured to:
logically replace an invalid block of the flash memory.

An advantage with this implementation form is that the electronic storage system can still work correctly even if a subset of the blocks becomes invalid/bad, which results in an extended lifetime of the flash memory.

In an implementation form of an electronic storage system according to the first aspect, the electronic storage system is configured to:
use a sector sequence number for each write sector of the flash memory.

An advantage of using a sequence number according to the implementation form is that it makes it possible for the electronic storage system to know which one of two versions of a valid write sector data that is new and which one that is old. Hereby, the number of required erases can be limited, as old write sector data is indirectly erased as soon as new write sector data, having a higher sequence number, has been correctly written. This procedure achieves an extended lifetime of the flash memory.

In an implementation form of an electronic storage system according to the first aspect, the first block and the second block are non-contiguous blocks.

An advantage with this implementation form is that data portions stored in multiple scattered non-contiguous blocks may be updated in one single storage system operation. This reduces write amplification, for example when these non-contiguous blocks comprise data being interrelated with each other. Thus, blocks in between the updated non-contiguous blocks do not have to be updated. In conventional solutions, all blocks, including the blocks in between the first and second blocks, have to be updated, which is causes high write amplification and a reduced flash memory lifetime.

In an implementation form of an electronic storage system according to the first aspect, the first block and the second block are non-contiguous in respect of a logical data structure of the flash memory.

An advantage with this implementation form is that this mapping between the logical data structure and the physical data structure of the flash memory makes it possible to handle certain aspects and features of the electronic storage system, for example bit error corrections and/or bad block replacements, such that an extended lifetime of the flash memory is provided. Also, such mapping makes it possible to logically divide a storage layer in individual layers with minimum interdependencies, and at the same time provide the minimized write amplification and power loss proofness.

According to a second aspect of the invention, the above mentioned and other objectives are achieved with an embedded device comprising:
an electronic storage system as herein described;
a flash memory; and
an application configured to utilize the electronic storage system for storing data in the flash memory.

An advantage with this aspect is that the lifetime of the embedded device is extended by the reduced write amplification provided by the herein described electronic storage system. Also, since the updates provided by the electronic storage system may be executed in a power loss proof way, the embedded device may also be power loss proof, thereby guaranteeing its functionality also after unexpected power losses.

According to a third aspect of the invention, the above mentioned and other objectives are achieved with a method for an electronic storage system for controlling a flash memory, the method comprises:
receiving an update request associated with at least a first data portion stored in a first block of the flash memory and a second data portion stored in a second block of the flash memory; and
updating, based on the update request, the first data portion stored in the first block and the second data portion stored in the second block in one storage system operation, without updating data portions stored in one or more blocks in between the first block and the second block.

The method according to the third aspect can be extended into implementation forms corresponding to the implementation forms of the electronic storage system according to the first aspect. Hence, an implementation form of the method comprises the feature(s) of the corresponding implementation form of the electronic storage system.

The advantages of the methods according to the third aspect are the same as those for the corresponding implementation forms of the electronic storage system according to the first aspect.

Embodiments of the invention also relates to a computer program, characterized in program code, which when run by at least one processor causes the at least one processor to execute any method according to embodiments of the invention. Further, embodiments of the invention also relate to a computer program product comprising a computer readable medium and the mentioned computer program, wherein the computer program is included in the computer readable medium, and may comprises one or more from the group of: read-only memory (ROM), programmable ROM (PROM), erasable PROM (EPROM), flash memory, electrically erasable PROM (EEPROM), hard disk drive, etc.

Further applications and advantages of embodiments of the invention will be apparent from the following detailed description.

### BRIEF DESCRIPTION OF THE DRAWINGS

The appended drawings are intended to clarify and explain different embodiments of the invention, in which:
- Fig. 1 shows an electronic storage system according to embodiments of the invention;
- Fig. 2 shows a flow chart of a method for an electronic storage system according to embodiments of the invention;
- Fig. 3 shows an embedded device according to embodiments of the invention;
- Fig. 4 shows a data object update according to embodiments of the invention;
- Figs. 5a-e show a data object update sequence according to embodiments of the invention;
- Figs. 6a-d show a data file update sequence according to embodiments of the invention; and
- Figs. 7a-b show conventional update examples.

### DETAILED DESCRIPTION

Write amplification is an undesirable phenomenon in conventional solutions comprising an electronic storage system utilizing a flash memory. Write amplification means that an amount of information actually being physically written to the flash memory is a multiple of the logical amount of information intended to be written by the user of the electronic storage system. Thus, if a certain number of data portions stored in blocks of the flash memory are to be updated due to an update request, more than that certain number of data portions are in conventional solutions often rewritten when the update is performed. Multiple data portions stored in multiple blocks are then rewritten with non-updated information, which causes unnecessary writing of data portions stored in blocks of the flash memory.

As mentioned above, a flash memory has a finite lifetime, which depends on the number of erase and reprogram cycles the flash memory is designed to be able to perform without degradation. Since each performed erase and reprogram cycle causes wear on the flash memory, write amplification is a waste of valuable erase and reprogram cycles, which unnecessarily reduces the total lifetime of the flash memory.

Therefore, it is herein presented a solution which mitigates or fully solves the drawbacks of conventional solutions. The herein presented solution avoids or reduces write amplification, such that unnecessary updates of data portions stored in blocks of the flash memory are kept to a minimum.

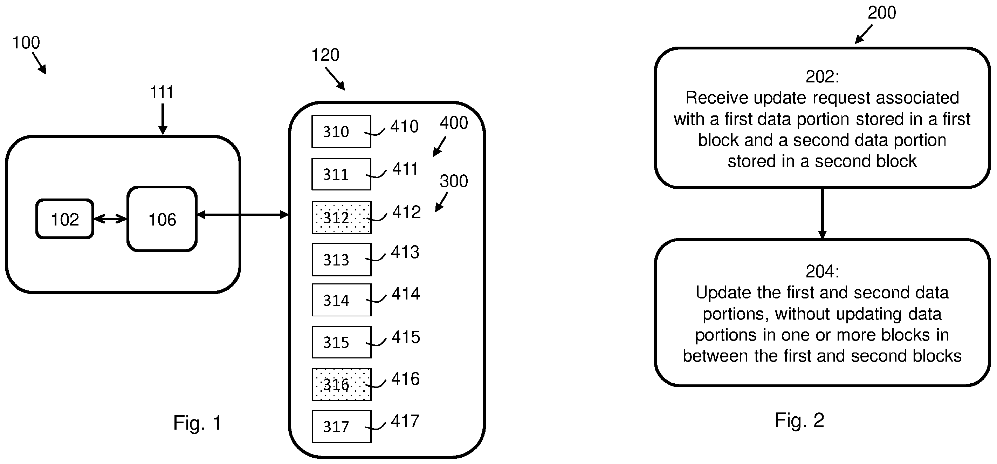

Fig. 1 schematically shows an electronic storage system 100 configured for controlling a flash memory 120. In the embodiment shown in Fig. 1, the electronic storage system 100 is implemented in a processor 106. The processor 106 is coupled to an internal memory 102. The processor 106 is further coupled to the flash memory 120.

The flash memory 120 comprises multiple blocks 410, 411, 412, 413, 414, 415, 416, 417, in which multiple data portions 310, 311, 312, 313, 314, 315, 316, 317 are stored, respectively. Thus, each block of the flash memory 120 may hold/store a data portion of a data object 300 of some kind.

The processor 106 may be referred to as one or more general-purpose CPU, one or more digital signal processor (DSP), one or more application-specific integrated circuit (ASIC), one or more field programmable gate array (FPGA), one or more programmable logic device, one or more discrete gate, one or more transistor logic device, one or more discrete hardware component, or one or more chipsets. The internal memory 102 may be a read-only memory, a random access memory (RAM), or a non-volatile RAM (NVRAM). The internal memory 102 and/or the processor 106 may be implemented in separate chipsets, or may be implemented in a common chipset. That the electronic storage system 100 is configured to perform certain actions can in this disclosure be understood to mean that the electronic storage system 100 is configured to control suitable means, such as e.g., the flash memory 120, to perform the actions.

According to embodiments of the invention, the electronic storage system 100 is configured to receive an update request 111 associated with at least a first data portion 312 stored in a first block 412 of the flash memory 120 and a second data portion 316 stored in a second block 416 of the flash memory 120. The electric storage system 100 is further configured to update, based on the update request 111, the first data portion 312 stored in the first block 412 and the second data portion 316 stored in the second block 416 in a single storage system operation, without updating data portions 312, 313, 314 stored in one or more blocks 413, 414, 415 in between the first block 412 and the second block 416.

Fig. 2 shows a flow chart of a corresponding method 200 which may be executed in an electronic storage system 100 configured to control a flash memory 120, such as the one schematically shown in Fig. 1. The method 200 comprises receiving 202 an update request 111 associated with at least a first data portion 312 stored in a first block 412 of the flash memory 120 and a second data portion 316 stored in a second block 416 of the flash memory 120. The method 200 further comprises updating 204, based on the update request 111, the first data portion 312 stored in the first block 412 and the second data portion 316 stored in the second block 416 in one storage system operation, without updating data portions 313, 314, 315 stored in one or more blocks 413, 414, 415 in between the first block 412 and the second block 416.

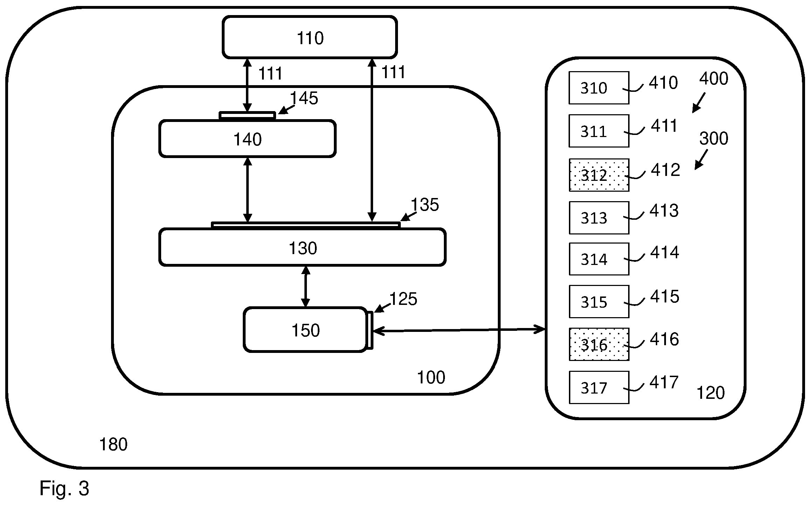

Fig. 3 schematically shows an embedded device 180. The embedded device 180 comprises an application 110, the electric storage system 100 and the flash memory 120. The application 110 can be essentially any kind of entity, function or device having a need to store data. As non-limiting examples of applications 110, word or acrobat reader applications, virus scanner systems, virtual trusted platform modules (TPM), or basic input output systems (BIOS) may be mentioned. The application 110 uses the electronic storage system 100 for storing essentially any kind of data, comprising for example configuration data, programming code, non-encrypted or encrypted data, various user data, such as e.g. pictures, music, user names, passwords, or other types of data.

The electric storage system 100 may comprise a higher layer file system 140 and/or a lower layer storage system 130. As non-limiting examples of file systems 140, file allocation table (FAT), second extended filesystem (ext2), third extended filesystem (ext3), fourth extended filesystem (ext4), and new technology file system (NTFS), may be mentioned. The lower layer storage systems 130 may be part of a storage media, such as for example a secure digital (SD) media, a multimedia card (MMC) entity or an embedded multimedia card (eMMC) entity, and may comprise for example a flash translation layer (FTL), an extended sector remapper (XSR) or a flex sector remapper (FSR). The electric storage system 100 may also comprise a flash driver 150 configured to update the flash memory 120, i.e. the flash driver 150 is configured to erase and write information in blocks of the flash memory 120. As non-limiting examples of flash memories, negative or (NOR) memories, negative and (NAND) memories, multimedia card (MMC) memories, secure digital (SD) memories, and embedded multimedia card (eMMC) memories may be mentioned. The application 110, the file system 140, the lower layer storage system 130, the flash driver 150 and/or the flash memory 120 communicate with each other by communication means known in the art.

As mentioned above, multiple data portions 310, 311, 312, 313, 314, 315, 316, 317 of a data object 300 may be stored in multiple blocks 410, 411, 412, 413, 414, 415, 416, 417, respectively, of the flash memory 120.

According to an embodiment, the electric storage system 100 comprises a storage system interface. The storage system interface may comprise a file system interface 145 and/or a lower layer storage system interface 135, whereby the electric storage system 100 is configured to communicate with the application 110. The storage system interface, i.e. file system interface 145 and/or lower layer storage system interface 135, comprises at least two pointers, including a first pointer to the first block 412 of the flash memory 120 and a second pointer to the second block 416 of the flash memory 120. An update request 111 is provided by the application 110, and may according to an embodiment be received by the electronic storage system 100 in one storage system interface call from the application 110. The update request 111 may alternatively, according to an embodiment, be provided to and received by the electronic storage system 100 in two or more storage system interface calls from the application 110. If the update is requested 111 in more than one storage system interface calls, the update request is built up by a record of multiple modifications received in these interface calls. When the record is completed, the update request is executed, e.g. by calling a commit interface. The commit interface call is used to indicate to the electronic storage system 100 that it should now flush the pending update requests, i.e. write the pending updates to the flash memory 120. When two or more modifications are received in two or more storage system interface calls, the commit interface call will trigger the electronic storage system 100 to perform the combined two or more modifications.

The application 110 may use the file system interface 145 to request file system actions, such as for example readfile, writefile, erasefile, openfile and/or closefile actions, to be performed in the file system 140. Thus, the one or more storage system interface calls then comprise one or more file system interface calls via the file system interface 145 to the file system 140.

The application 110 may also use the lower storage layer system interface 135 to request lower storage layer actions, such as for example, readdata, writedata and/or erasedata actions, to be performed in the flash memory 120 by the lower storage layer system 130. Data is hereby stored and/or updated in a linear virtual address space in the flash memory 120, which is provided by the Lower storage layer system 130. Thus, the one or more storage system interface calls then comprise one or more lower storage layer system interface calls via the lower storage layer system interface 135 to the lower storage layer system 130.

A data update request from the application 110 to the electronic storage system 100 may thus comprise an electronic storage system update request 111 towards the file system 140 via the file system interface 145 and/or towards the lower storage layer system 130 via the lower storage layer system interface 135, where both of the file system 140 and the lower storage layer system 130 are comprised in the electronic storage system 100.

The lower storage layer 130 is configured to utilize the flash driver 150 to update the flash memory 120 via a flash memory interface 125. For executing an electronic storage system update request 111, the electronic storage system 100 often has to perform multiple flash memory operations towards the physical flash memory 120. The flash driver 150 may be configured to handle physical read, write and/or erase actions towards the flash memory 120 via the flash memory interface 125. These actions may be handled by providing a specific sequence of commands or similar to the flash memory 120.

According to an embodiment, the file system 140 also uses, via the lower storage layer system interface 135, the lower storage layer system 130 for its storage of data in the flash memory 120. The file system 140 is responsible for the higher layer file system interface 145 and provides the functionality of the file system 140 by utilizing a linear virtual address space in the flash memory 120 provided by the lower storage layer system 130. The lower storage layer system 130 thus provides, by utilization of the lower layer flash driver 150 and flash memory 120, an error free linear virtual address space in the flash memory 120. This linear virtual address space in the flash memory 120 is usable for the upper layer file system 140. This means that any possible limitations of the flash driver 150 and/or the flash memory 120, such as for example limitations associated with erase and write actions, read size, memory lifetime, side effects, and error types, may be handled by the lower storage layer system 130.

According to another embodiment, the file system 140 itself includes the functionality normally provided by the lower storage layer system 130. The file system 140 then does not use the lower storage layer system interface 135 when storing data in the flash memory 120, since it communicates directly with the flash driver 150 instead.

According to an embodiment, the above mentioned first block 412, in which the first data portion 312 is stored, and the above mentioned second block 416, in which the second data portion 316 is stored are non-contiguous blocks. In this document, blocks being non-contiguous means that they are non-contiguous in respect of their virtual linear address spaces. The virtual linear address spaces may for example be accessed through the lower layer storage system interface 135. Each information within a block in the flash memory 120 has an associated address within such a virtual linear address space. If, for example, information is read from a virtual address space corresponding to a certain offset by utilizing of the lower layer storage system interface 135, the information within the block that is associated with that certain virtual address offset is supplied. Thus, the first block 412 is here associated with a first logical address space and the second block 416 is associated with a second logical address space. The first and the second logical address spaces are in other words logically separated, i.e. are non-continuous.

As mentioned above, according to an embodiment, the storage system interface 135, 145 comprises a first pointer to the first block 412 and a second pointer to the second block 416. This makes it possible to update both the first data portion 312 stored in the first block 412 and the second data portion 316 stored in the second block 416 in one single storage system operation as a result of an electronic storage system update request 111.

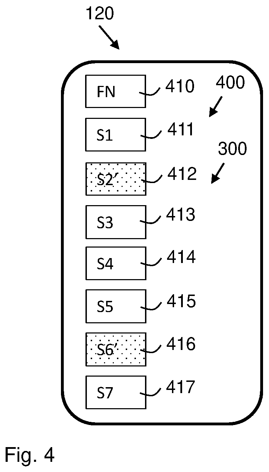

Fig. 4 schematically illustrates an embodiment, where the electronic storage system 100 is configured to store data portions/sections FN, S1, S2, S3, S4, S5, S6, S7 of a data object 300 in a set 400 of multiple blocks 410, 411, 412, 413, 414, 415, 416, 417 of the flash memory 120. The data portions FN, S1, S2, S3, S4, S5, S6, S7 may, according to various embodiments, be stored linearly, as exemplified in Fig. 4, or may be stored non-linearly. FN is here the file name and S1, S2, S3, S4, S5, S6, S7 are other sections of the data object 300. Thus, the first data portion 312 is in the embodiment exemplified in Fig. 4 a first data portion/section S2 of the data object 300, being stored in a first block 412, and the second data portion 316 is a second portion/section S6 of the data object 300, being stored in a second block 416. According to the embodiment, both the first data portion/section S2 and the second data portion/section S6 can be updated with new data S2', S6' from the application 110, respectively, in one single storage system operation, since the storage system interface 135, 145 comprises multiple pointers, including a first pointer to the first block 412 and a second pointer to the second block 416. The data portions/sections stored in one or more blocks in between the first block 412 and the second block 416, in Fig. 4 illustrated as data portion/section S3 stored in block 413, data portion/section S4 stored in block 414, and data portion/section S5 stored in block 415, are left without being updated as a result of the electric storage system request associated with the first data portion/section S2 and the second data portion/section S6.

According to an embodiment, the update of the first data portion/section S2 stored in the first block 412 to an updated first data portion/section S2' and of the second data portion/section S6 stored in the second block 416 to an updated second data portion/section S6' is performed in a power loss proof way. By the power loss proof update, either all data portions/sections associated with the update request are updated within the virtual linear address spaces, such that a completely updated version of the data object 300 is thereafter available for retrieval, or all data portions associated with the update request are left without being updated, such that the original version of the data object 300 is available for retrieval. Hereby, there is always either a completely updated version or a non-updated version of the data object 300 available for retrieval, also if there is an unexpected loss in power, i.e. a power failure during the update as such. In other words, after the power loss proof update, there is not only a data object 300 available which has been partially updated such that it comprises a mix of old and updated data. After a power loss/interruption, there is thus always either an original version of the data object 300 or a completely updated version of the data object 300 available to be retrieved, which secures the robustness of e.g. an embedded device 180 comprising the electronic storage system 100.

The power loss proof update ensures that an unexpected power outage does not leave the data in the flash memory 120 in an inconsistent state, which would prevent the embedded device 180 from booting and/or functioning correctly. For example, for a power loss proof file system, i.e. where the data object 300 is a data file, a feature of the higher layer file system 140 is that the file system 140 is in a consistent state even after a power loss, such that files and/or the entire memory are not damaged or lost by the power loss. Also, if an update of the file in the flash memory 120 is interrupted by a power loss, the file comprises either old or new/updated data at the next access to the filesystem. However, the file never comprises only a mix of old and new/updated data, wherefore the file may always be retrieved after the update.

According to an embodiment, the first data portion/section S2 and the second data portion/section S6 are updated with new data within one and the same storage system operation as a result of one storage system update request 111, leaving data portions/sections S3, S4 and S5 in blocks between without being updated. Hereby, even if the first data portion/section S2 and the second data portion/section S6 comprise interrelated data, a power loss proof update is provided, since either both or none of the first data portion/section S2 and the second data portion/section S6 are updated in the storage system operation, at the same time as write amplification is avoided.

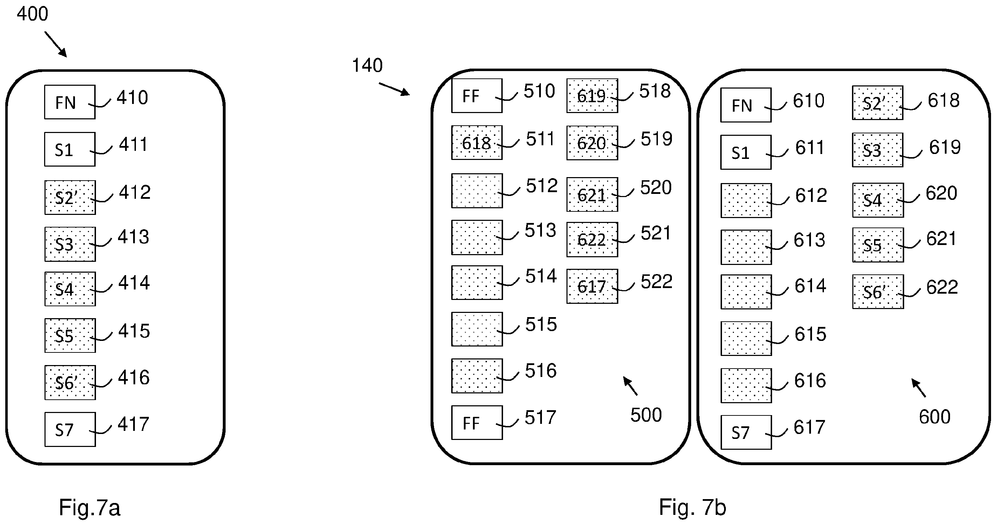

As illustrated in Fig. 4, only two data portions/sections, the dotted first data portion/section S2 stored in the first block 412 and the second data portion/section S6 stored in the second block 416, have to be updated with new data S2', S6' from the application 110 according to the herein described embodiments providing a power loss proof update. This may be compared to a conventional solution illustrated in Fig. 7a, in which five data portions/sections, i.e. all of the dotted data portions/sections S2', S3, S4, S5, S6' would have to be updated in one storage system operation in order to provide a power loss proof update of the first data portion/section S2 and the second data portion/section S6, for example if the updated first data portion/section S2' and the updated second data portion/section S6' comprise new interrelated data. Since the conventional storage system interface only comprise a single pointer, it was not possible to point to multiple non-contiguous blocks in conventional solutions, wherefore the whole sequence of data portions/sections S2', S3, S4, S5, S6' have been rewritten in Fig. 7a, although the data portions/sections S3, S4, S5 in blocks 413, 414, 415 between the first block 412 holding the updated first data portion/section S2' and the second block 416 holding the updated second data portion/section S6' are rewritten with original data. Thus, the above described embodiments only update the actual data portions/sections for which new data is available, and leaves data portions in one or more blocks in between the blocks holding the updated data portion/sections without update. Hereby, the herein described embodiments reduce the write amplification necessary compared to conventional solutions, whereby the flash memory lifetime is improved.

It should be noted that. although the embodiments are here exemplified using a first data portion/section S2 and a second data portion/section S6 of a data object 300, the herein described embodiments are generally applicable to update of essentially any number of data portions, for example data portions 311, 312 and data portions 315, 316, being stored in two or more blocks, for example blocks 411, 412 and blocks 415, 416, of the flash memory 120, where the two or more blocks comprise at least two non-contiguous blocks, in one single storage system operation. According to herein described embodiments, the update of any such multiple data portions 311, 312 and 315, 316 stored in such multiple blocks 411, 412 and 415, 416 may performed in a power loss proof way.

According to an embodiment, the flash memory 120 comprises multiple erase blocks, where each erase block comprises one or more erasable entities of the flash memory 120. Each erase block further comprises one or more write sectors, where the write sectors are the smallest writable entities of the flash memory 120. The above mentioned first block 412 here corresponds to an erase block and the above mentioned second block 416 corresponds to another erase block.

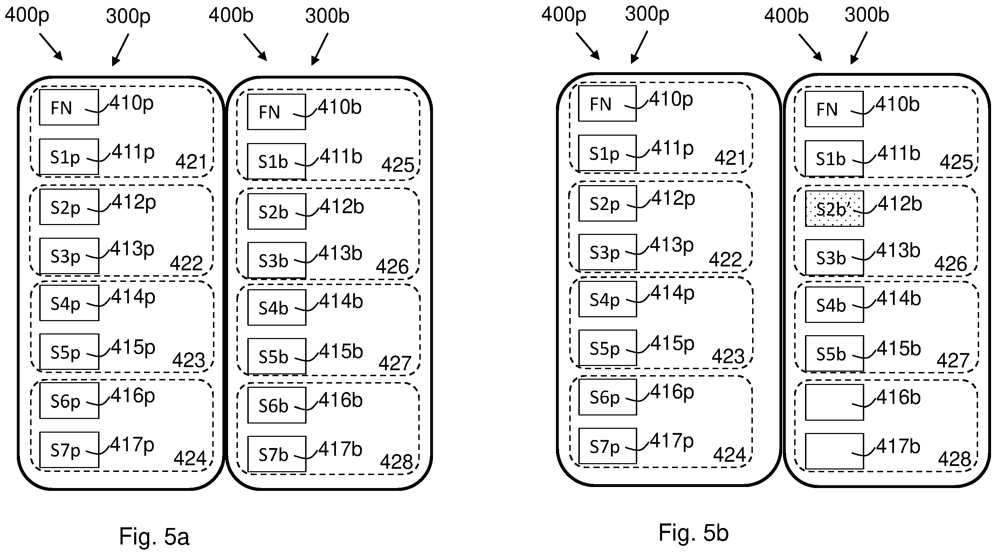

According to an embodiment schematically illustrated in Figs. 5a-e, the flash memory 120 comprises multiple erase blocks 421, 422, 423, 424, 425, 426, 427, 428 divided into a set 400p of primary erase blocks 421, 422, 423, 424 and a set 400b of backup erase blocks 425, 426, 427, 428. A primary version 300p of the data object 300 is stored in the set 400p of primary erase blocks, i.e. is stored in the write sectors 410p, 411p, 412p, 413p, 414p, 415p, 416p, 417p of the set 400p of primary erase blocks. A backup version 300b of the data object 300 is stored in the set 400b of backup erase blocks, i.e. is stored in the write sectors 410b, 411b, 412b, 413b, 414b, 415b, 416b, 417b of the set 400b of backup erase blocks.

Figs. 5a-e schematically illustrate an example of how a power loss proof update may be performed for such a primary version 300p and such a backup version 300b of the data object in a sequence of flash memory operations performed within one single storage system operation. In this example, the storage system update request is associated with the primary version S2p and the backup version S2b of a first data portion/section, and with the primary version S6p and the backup version S6b of a second data portion/section. The presented power loss proof update sequence may be used for a lower storage layer system 130. The example is simplified to explain the embodiment, and aims to illustrate that the embodiment makes it possible to group updates to multiple non-contiguous erase blocks in a way such that the update becomes power loss proof. Thus, the primary version S2p of the first data portion/section and the primary version S6p of the second data portion/section are updated simultaneously together, and the backup version S2b of the first data portion/section and the backup version S6b of the second data portion/section are also updated together. Hereby, an original and/or an updated dataset will be available for retrieval in case of power loss at any given state.

As schematically illustrated in Fig. 5a, the electronic storage system 100 is, according to an embodiment, configured to store the primary version S2p of the first data portion/section in a first primary write sector 412p of a first primary erase block 422, and to store the primary version S6p of the second data portion/section in a second primary write sector 416p of a second primary erase block 424. The electronic storage system 100 is further configured to store a primary version S3p of a third data portion/section in a third primary write sector 413 of the first primary erase block 422, and to store a primary version S7p of a fourth data portion/section in a fourth primary write sector 417p of the second primary erase block 424. The first primary erase block 422 and the second primary erase block 424 are in this example non-contiguous erase blocks, with at least one erase block 423 in between.

The electronic storage system 100 is further configured to store the backup version S2b of the first data portion/section in a first backup write sector 412b of a first backup erase block 426, and to store the backup version S6b of the second data portion/section in a second backup write sector 416b in a second backup erase block 428. The electronic storage system 100 is further configured to store a backup version S3b of a third data portion/section in a third backup write sector 413b of the first backup erase block 426, and to store a backup version S7b of a fourth data portion/section in a fourth backup write sector 417b of the second backup erase block 428. The first backup erase block 426 and the second backup erase block 428 are non-contiguous erase blocks, with at least one erase block 427 in between.

Fig. 5b shows a flash memory operation, in which the electronic storage system 100 is configured to erase the contents in the first backup erase block 426 and in the second backup erase block 428. Thus, the backup version S2b of the first data portion/section, the backup version S3b of the third data portion/section, the backup version S6b of the second data portion/section, and the backup version S7b of the fourth data portion/section are erased. Then, an updated backup version S2b' of the first data portion/section is written in the first backup write sector 412b of the first backup erase block 426, based on new information from the application 110. The primary version S3p of the third data portion/section is copied from the third primary write sector 413p of the first primary erase block 422 to the third backup write sector 413b as a backup version S3b of the third data portion/section.

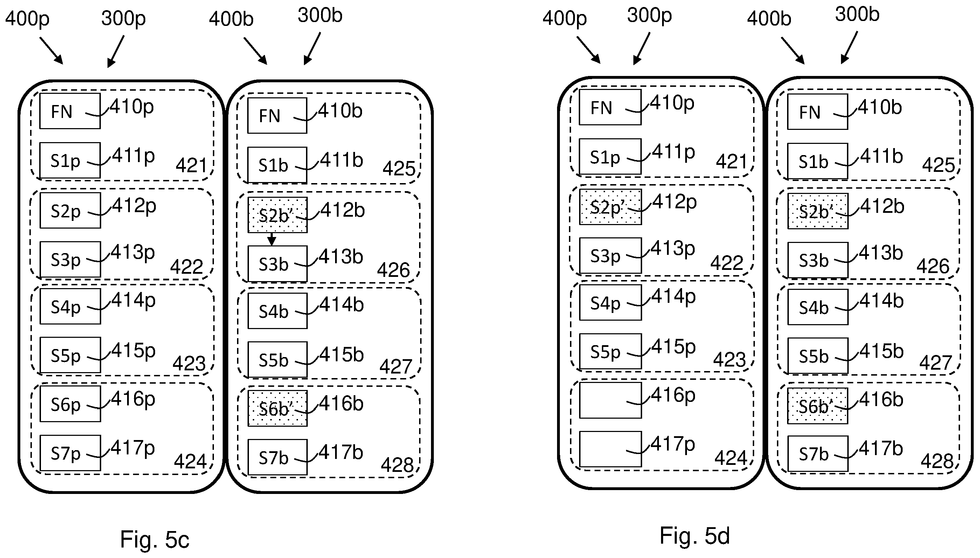

Fig. 5c shows a following flash memory operation, in which the electronic storage system 100 is configured to write an updated backup version S6b' of the second data portion/section in the second backup write sector 416b of the second backup erase block 428. The primary version S7p of the fourth data portion/section is copied from the fourth primary write sector 417p to the fourth backup write sector 417b as a backup version S7b of the fourth data portion/section.

Fig. 5d shows a following flash memory operation, in which the electronic storage system 100 is configured to erase the contents in the first primary erase block 422 and in the second primary erase block 424. Thus, the primary version S2p of the first data portion/section, the primary version S3p of the third data portion/section, the primary version S6p of the second data portion/section, and the primary version S7p of the fourth data portion/section are erased. Then, the contents of the first backup erase block 426 is copied to the first primary erase block 422. Thus, the updated backup version S2b' of the first data portion/section is copied from the first backup write sector 412b to the first primary write sector 412p as an updated primary version S2p' of the first data portion/section, the backup version S3b of the third data portion/section is copied from the third backup write sector 413b to the third primary write sector 413p as a primary version S3p of the third data portion/section.

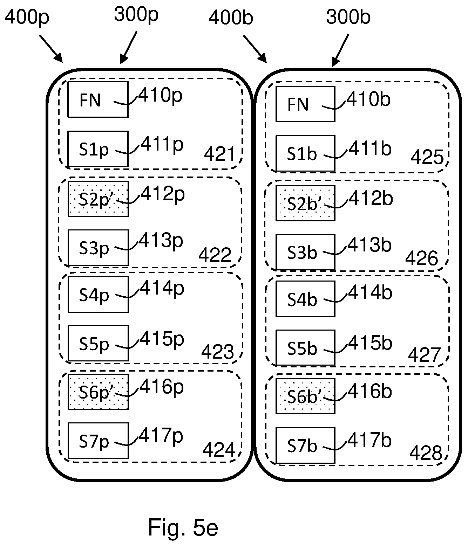

Fig. 5e shows a following flash memory operation, in which the contents of the second backup erase block 428 is copied to the second primary erase block 424. Thus, the updated backup version S6b' of the second data portion/section is copied from the second backup write sector 416b to the second primary write sector 416p as an updated primary version S6p' of the second data portion/section, and the backup version S7b of the fourth data portion/section is copied from the fourth backup write sector 417b to the fourth primary write sector 417p as a primary version S7p of the fourth data portion/section.

After all of the flash memory operations illustrated in Figs. 5a-e have been performed, both the primary version 300p and the backup version 300b of the data object are fully updated. Thus, the primary version 300p of the data object in the primary set 400p of erase blocks comprises fully updated data portions/sections FN, S1p, S2p', S3p, S4p, S5p, S6p', S7p, and the backup version 300b of the data object in the backup set 400b of erase blocks also comprises fully updated data portions/sections FN, S1b, S2b', S3b, S4b, S5b, S6b', S7b.

Further, after each of the flash memory operations in Figs. 5a-c, there is at least one set of erase blocks 400p, 400b, from which the old version of the data object can be recovered. After each of the flash memory operations in Figs. 5c-e, there is at least one set of erase blocks 400p, 400b, from which the updated version of the data object can be recovered. Since either the old data object and/or the fully updated data object is retrievable in each step, the update illustrated in Figs. 5a-e is power loss proof, in case an unexpected power loss would occur during this sequence of flash memory update operations.

As illustrated in Fig. 5e, only the dotted updated primary version S2p' and backup version S2b' of the first data portion/section, and the dotted updated primary version S6p' and backup version S6b' of the second data portion/section, have been updated with new data from the application. Further, as explained above, according to the embodiment, the at least one erase block 423 in between the non-contiguous first primary erase block 422 and second primary erase block 424, and the at least one erase block 427 in between the non-contiguous first backup erase block 426 and second backup erase block 428 are not updated, i.e. are left non-updated/altered/changed when the update sequence is performed. This targeted update reduces write amplification, and was not possible with conventional solutions. In convention solutions, the at least one erase block 423 in between the first primary erase block 422 and the second primary erase block 424, and the at least one erase block 427 in between the first backup erase block 426 and the second backup erase block 428 would have been updated in this example, which would have caused write amplification and unnecessary shortening of the flash memory lifetime compared to the herein presented embodiments.

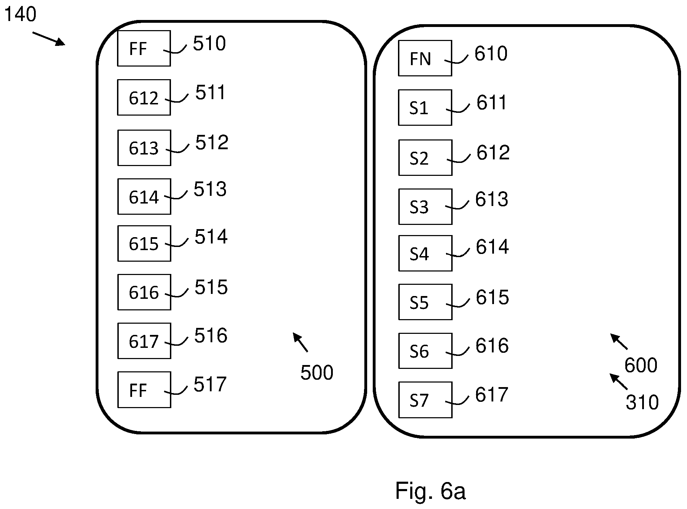

According to an embodiment schematically illustrated in Fig. 6a, the electronic storage system 100 comprises a file system 140. The file system 140 may for example be a file allocation table (FAT) system, or may be another suitable file system. The below example for a FAT system is given to explain the file system embodiments, and is not limiting for the scope of the herein presented embodiments.

The file system 140, such as e.g. a FAT system, utilizes a data area 600 and a file table 500 stored in the flash memory 120. The file table 500 comprises multiple table entries 510, 511, 512, 513, 514, 515, 516, 517, where each table entry is associated with a memory cluster 610, 611, 612, 613, 614, 615, 616, 617 of the data area 600, in which a data portion/cluster value FN, S1, S2, S3, S4, S5, S6, S7 of a data file 310 is stored. Thus, the file table 500 has a table entry for each memory cluster.

In the example shown in Fig. 6a, a file name (FN) is stored in a name memory cluster 610, a first cluster value S1 of a data file 310 is stored in a first memory cluster 611, a second cluster value S2 of the data file 310 is stored in a second memory cluster 612, a third cluster value S3 of the data file 310 is stored in a third memory cluster 613, a fourth cluster value S4 of the data file 310 is stored in a fourth memory cluster 614, a fifth cluster value S5 of the data file 310 is stored in a fifth memory cluster 615, a sixth cluster value S6 of the data file 310 is stored in a sixth memory cluster 616, and a seventh cluster value S7 of the data file 310 is stored in a seventh memory cluster 617.

Further, the file table 500 comprises multiple table entries 510, 511, 512, 513, 514, 515, 516, 517 storing/holding table entry values FF, 612, 613, 614, 615, 616, 617, FF. The table entry values include a file name entry termination indicated as FF in a file name table entry 510, and a file terminator indicated as FF in a terminator table entry 517. The other table entry values indicate in which order the associated memory clusters 610, 611, 612, 613, 614, 615, 616, 617 should be read. Thus, the table entries 510, 511, 512, 513, 514, 515, 516, 517 store/hold table entry values FF, 612, 613, 614, 615, 616, 617, FF indicating the name of the data file 310, how the memory clusters should be read, and the end of the data file.

The table entry values stored in the file table 500 indicate how, i.e. in which order, the memory clusters 610, 611, 612, 613, 614, 615, 616, 617 should be read in order to read the data file 310 properly. In this example, the name memory cluster 610 stores the file name (FN) and an indication that the first memory cluster 611 holds the start of the data file, i.e. that the first cluster value S1 of the data file is stored in the first memory cluster 611. The table entry value 612 stored in the first table entry 511, which is associated with the first memory cluster 611, indicates which memory cluster to be read after the first memory cluster 611, i.e. that the second cluster value S2 of the data file is stored in the second memory cluster 612. The table entry value 613 stored in the second table entry 512, which is associated with the second memory cluster 612, indicates that the third cluster value S3 of the data file is stored in the third memory cluster 613. And so on, until the table entry value stored in the terminator table entry 517 indicates that the seventh cluster value S7 is the last cluster value of the data file 310. Thus, if the data file 310 is read in Fig. 6a, it comprises the following sequence of cluster values: S1→S2→S3→S4→S5→S6→S7.

According to an embodiment, schematically illustrated by the example in Figs. 6a-c and explained in detail below, the above mentioned update request 111 indicates multiple data portions to be updated, which are stored in memory clusters associated with multiple table entries of the file table 500. The update request 111 thus indicates an update of the data file 310, and the electronic storage system 100 is configured to, as a result of the update request 111, write updated data portions S2', S6' of the data file in two or more previously unallocated memory clusters 618, 619. Then, these updated data portions S2', S6' stored in the two or more new memory clusters 618, 619 are activated by updating values of multiple table entries 511, 515, 518, 519 such that the updated data portions S2', S6' in the two or more new memory clusters 618, 619 are comprised in the data file 310. At least two of the values of the table entries 511, 515 are here updated in a single flash memory operation. Thus, the values of the table entries 511, 515, 518, 519 are updated such that the updated data portions S2', S6' are included when the data file 310 is read, and at least a subset 511, 515 of these table entry values are updated such that a power loss proof update of the data file 310 is provided.

More in detail, the original data file 310 is initially stored in the file system 140 as shown in Fig. 6a. In this non-limiting example, the above mentioned first data portion/section 312 of the data file 310 is the second cluster value S2 stored in the second memory cluster 612, and the above mentioned first block 412 is the second memory cluster 612. The above mentioned second data portion/section 316 of the data file 310 is the sixth cluster value S6 stored in the sixth memory cluster 616, and the above mentioned second block 416 is the sixth memory cluster 616.

According to the example, both the first data portion/section 312, i.e. the second cluster value S2, and the second data portion/section 316, i.e. the sixth cluster value S6, can be updated with new data S2', S6' from the application 110, respectively, in one single storage system operation. The data portions/cluster values S3, S4, S5 stored in one or more blocks/memory clusters 613, 614, 615 in between the second memory cluster 612 and the sixth memory cluster 616, are left without being updated as a result of the electric storage system request associated with the first data portion 312/S2 and the second data portion 316/S6.

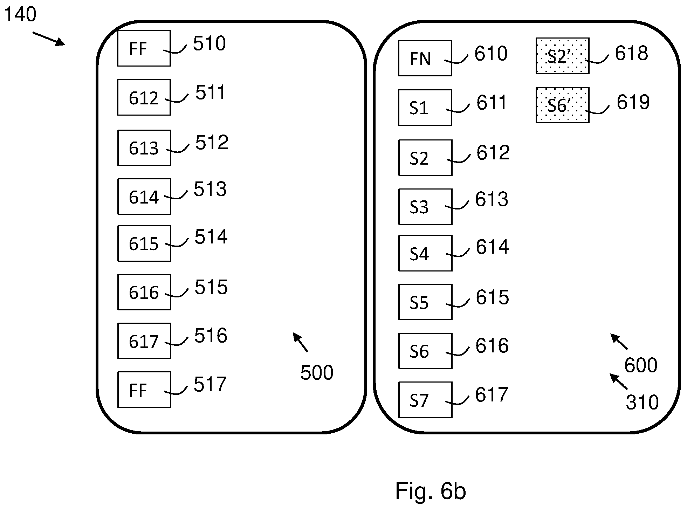

According to the example, an update request 111 is received by the electronic storage system 100. The update request 111 comprises indications that two cluster values of the data file, the second cluster value S2 and the sixth cluster value S6, should be updated with new content, i.e. the data file 310 should be updated with an updated second cluster value S2' and an updated sixth cluster value S6'. As a response to this update request 111, the updated second cluster value S2' is written into a previously empty/unallocated eighth memory cluster 618, and the updated sixth cluster value S6' is written to another previously empty/unallocated ninth memory cluster 619, as illustrated in Fig. 6b. However, the file table 500 is not yet updated. Therefore, if the data file 310 is read in Fig. 6b, it comprises the following sequence of cluster values: S1→S2→S3→S4→S5→S6→S7, which means that an original version of the data file 310 is retrieved.

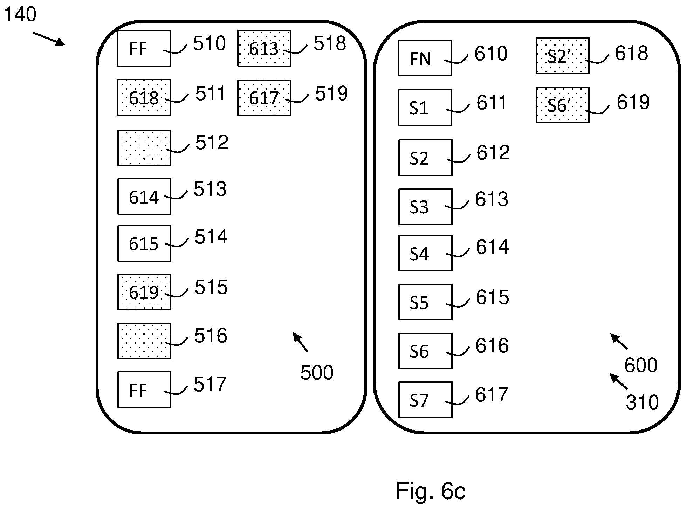

Then, as illustrated in Fig. 6c, the table entry values in the file table 500 are updated such that the updated second cluster value S2' stored in the eighth memory cluster 618 and the updated sixth cluster value S6' stored in the new ninth memory cluster 619 are both activated and comprised in the data file 310. The first table entry 511 is here updated with a new table entry value 618 pointing to the updated second cluster value S2' stored in the new eighth memory cluster 618. The fifth table entry 515 is updated with a new table entry value 619 pointing to the updated sixth cluster value S6' now stored in the new ninth memory cluster 619. The table entry value 613 is stored in an eighth table entry 518 associated with the new memory cluster 618. The table entry value 617 is stored in a ninth table entry 519 associated with the new ninth memory cluster 619. At least the values of the first table entry 511 and of the fifth table entry 515 are here updated in a single flash memory operation, whereby the file table 500, and thus the data file 310, is updated in a power loss prove way. The power loss proof update of the file table 500 may be done as described above, for example in connection with Fig. 4 or Figs. 5a-e.

When reading the updated data file 310 illustrated in Fig. 6c, the name memory cluster 610 stores the file name (FN) and an indication that the first memory cluster 611 holds the start of the data file 310, i.e. the first cluster value S1 of the data file. After the first cluster value S1, the updated second cluster value S2' should be read. Therefore, the new table entry value 618 stored in the first table entry 511 indicates that the previously empty eighth memory cluster 618, where the updated second cluster value S2' is now stored, should be read after the first memory cluster 611. The table entry value previously stored in the second table entry 512 is deleted, and instead a table entry value 613 stored in the eighth table entry 518 associated with the eighth memory cluster 618 where the updated second cluster value S2' is stored indicates that the third cluster value S3 of the data file, which is stored in the third memory cluster 613, should be read. And so on, until the new table entry value 619 stored in the fifth table entry 515 indicates that, after the fifth cluster value S5, the updated sixth cluster value S6' should be read in the ninth memory cluster 619. The previous table entry value of the sixth table entry 516 is deleted. A table entry value 617 stored in the ninth table entry 519 associated with the ninth memory cluster 619 where the updated sixth cluster value S6' is stored indicates that the seventh cluster value S7 should be read in the seventh memory cluster 617 after the updated sixth cluster value S6'. Then, the table entry value FF stored in the terminator table entry 517 indicates that the seventh cluster value S7 is the last cluster value of the data file 310. Thus, if the updated data file 310 is read in Fig. 6c, it comprises the following sequence of cluster values: S1→S2'→S3→S4→S5→S6'→S7, which means that the completely updated data file is read.

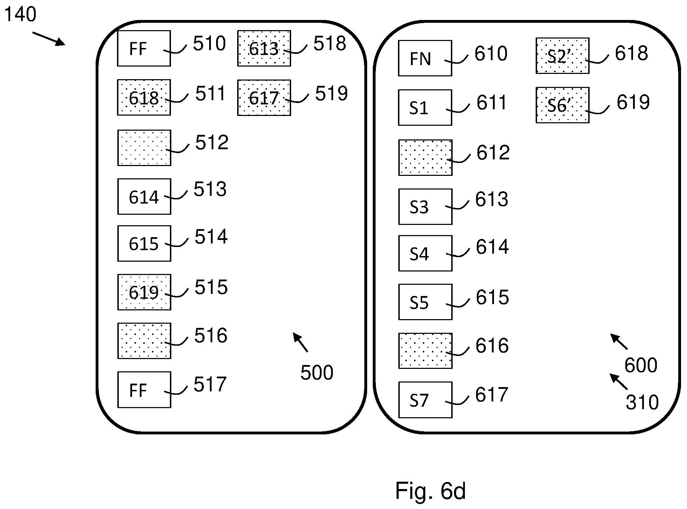

Then, as illustrated in Fig. 6d, the original second cluster value S2 and the original sixth cluster value S6 of the data file 310 are deleted from their respective second and sixth memory clusters 612, 616. If the updated data file 310 is read in Fig. 6d, it comprises the completely updated sequence: S1→S2'→S3→S4→S5→S6'→S7.

Thus, according to the embodiment, it is possible to perform a power loss proof update of the file table 500 and thus of the data file 310, at the same time as write multiplication is avoided. The update of the file table 500, causing the switch from original data portions S2, S6 to updated data portions S2', S6' of the data file 310, is especially useful when the update of the file table 500 impacts data portions of the data file stored in multiple non-continuous memory clusters, since this update ensures that there is no risk for leaving an only partially updated data file somewhere in the sequence. Thus, the portions of a data file stored in non-contiguous memory clusters may be robustly updated in a power loss proof manner.

In Fig. 6d, the 10 erased and/or written table entries and memory clusters 511, 512, 515, 516, 518, 519, 612, 616, 618, 619 are dotted. This can be compared to a conventional solution shown in Fig. 7b, for which 21 dotted table entries and memory clusters 511, 512, 513, 514, 515, 516, 518, 519, 520, 521, 522, 612, 613, 614, 615, 616, 618, 619, 620, 621, 622 have to be erased and/or written in order to provide a corresponding power loss proof update of the data file 310.

In the example shown in Figs. 6a-d, which is simplified to explain the embodiment, each memory cluster 610, 611, 612, 613, 614, 615, 616, 617 stores one data portion/section FN, S1, S2, S3, S4, S5, S6, S7 of the data file 310. However, in other embodiments, two or more data portions/sections may also be stored in each memory cluster. Generally, the data area 600 often takes up considerably more of the flash memory 120 than the file table 500.

According to an embodiment, the electronic storage system 100 is configured to level a number of erases across the various blocks of the flash memory 120. Thus, the herein described embodiments for updating the flash memory 120 may be combined with so called wear levelling. There are different types of wear levelling, such as static wear levelling and dynamic wear levelling. The general idea of wear leveling is that they aim to provide an optimal distribution of erases throughout a storage area of the flash memory 120. Dynamic wear levelling is designed to spread the wear due to erases by utilizing a dynamic data update throughout the entire storage area. An advantage with dynamic wear levelling is that it does not add to the wear of the flash memory 120 itself. Instead, it only distributes the wear generated by the usage of the flash memory 120 across the flash memory 120 in a best possible way. Static wear levelling actively moves data around across the storage area. Static data is in static wear levelling moved to a block with high erase count, such that the number of erases of that particular block is limited. Also, blocks with relative low erase count is used for storage of more dynamic data. Wear levelling extends the flash memory lifetime.

According to an embodiment, the electronic storage system 100 is configured to write updated data portions in multiple write sectors of an erase block of the flash memory 120 before erasing the erase block. Thus, the herein described embodiments for updating the flash memory 120 may be combined with a so called sector update scheme. The electronic storage system 100 can hereby reduce the number of physical erases by writing the same logical sector into multiple physical write sectors within the same erase block. For example, if one erase block holds ten write sectors, then that erase block can hold ten updates before it needs to be erased. If updates are done in sequential order, there is no need to erase the content of previously used write sectors, as they are automatically invalidated by subsequently writing updates in write sectors having higher write sector numbers within the erase block. Use of a sector update scheme increases the lifetime of the flash memory 120.

According to an embodiment, the electronic storage system 100 is configured to logically replace an invalid block, which is sometimes called a bad block, of the flash memory 120. Thus, the herein described embodiments for updating the flash memory 120 may be combined with so called bad block replacement. In some flash memory types, such as e.g. in NAND flash memory, some blocks may become invalid, i.e. not useful, already within the expected flash memory lifetime. In this case the electronic storage system 100 automatically allocates a new block to be used instead of the invalid block to ensure the electronic storage system 100 still works as expected. The same approach may be used for other flash memory types to extend system lifetime. This is especially important if some of the blocks of the flash memory 120 get invalidated long before the rest of the blocks do. Usage of bad block replacement prolongs the flash memory lifetime.

According to an embodiment, the electronic storage system 100 is configured to use a sector sequence number for each write sector of the flash memory 120. Thus, the herein described embodiments for updating the flash memory 120 may be combined with so called sector sequence update. Sector sequence update may typically be used to minimize block erases if a sequence of logical pages is written one-by-one through multiple storage system requests. Only the new data is then written in a new block, without moving all other data together with the new data, and without erasing the old block. This gives the electronic storage system 100 the possibility to further update the other pages in the new block, and in that way update multiple times in the same block before a block erase is triggered. The electronic storage system 100 is here still able to differentiate between old and new updated data in case of a sudden power loss. This is due to that each write sector of the flash memory 120 comprises a sector sequence number, where the sector sequence number is used for indicating which of the data is most recently updated.

Furthermore, any method according to embodiments of the invention may be implemented in a computer program, having code means, which when run by processing means causes the processing means to execute the steps of the method. The computer program is included in a computer readable medium of a computer program product. The computer readable medium may comprise essentially any memory, such as previously mentioned a read-only memory (ROM), a programmable read-only memory (PROM), an erasable PROM (EPROM), a flash memory, an electrically erasable PROM (EEPROM), or a hard disk drive.

Moreover, it should be realized that the electronic storage system and the embedded device comprise the necessary communication capabilities in the form of e.g., functions, means, units, elements, etc., for performing or implementing embodiments of the invention. Embodiments of other such means, units, elements and functions are: processors, memory, buffers, control logic, encoders, decoders, rate matchers, de-rate matchers, mapping units, multipliers, decision units, selecting units, switches, interleavers, de-interleavers, modulators, demodulators, inputs, outputs, antennas, amplifiers, receiver units, transmitter units, DSPs, MSDs, TCM encoder, TCM decoder, power supply units, power feeders, communication interfaces, communication protocols, etc. which are suitably arranged together for performing the solution.

Therefore, the processor(s) of the electronic storage system and the embedded device may comprise, e.g., one or more instances of a central processing unit (CPU), a processing unit, a processing circuit, a processor, an application specific integrated circuit (ASIC), a microprocessor, or other processing logic that may interpret and execute instructions. The expression "processor" may thus represent a processing circuitry comprising a plurality of processing circuits, such as e.g., any, some or all of the ones mentioned above. The processing circuitry may further perform data processing functions for inputting, outputting, and processing of data comprising data buffering and device control functions, such as call processing control, user interface control, or the like.

## Claims

1. An electronic storage system (100) for controlling a flash memory (120), the electronic storage system (100) being configured to:
store data portions (FN, S1, S2, S3, S4, S5, S6, S7) of a data object (300) in multiple blocks (410, 411, 412, 413, 414, 415, 416, 417) of the flash memory (120); wherein
a first data portion (312) is a first data portion (S2) of the data object (300); and
a second data portion (316) is a second data portion (S6) of the data object (300);
receive an update request (111) associated with at least the first data portion (312) stored in a first block (412) of the flash memory (120) and the second data portion (316) stored in a second block (416) of the flash memory (120); and is **characterised by**
updating, based on the update request (111), the first data portion (312) stored in the first block (412) and the second data portion (316) stored in the second block (416) in a single storage system operation, without updating data portions (313, 314, 315) stored in one or more blocks in between the first block (412) and the second block (416).

2. The electronic storage system (100) according to claim 1, wherein the first data portion (312) and the second data portion (316) comprise interdependent information.

3. The electronic storage system (100) according to claim 1 or 2, wherein the electronic storage system (100) is configured to:
receive the update request (111) in one storage system interface call from an application (110); and
receive the update request (111) in two or more storage system interface calls from an application (110).

4. The electronic storage system (100) according to any one of the preceding claims, wherein the electronic storage system (100) comprises a storage system interface (135, 145), the storage system interface (135, 145) comprising a first pointer to the first block (412) and a second pointer to the second block (416), wherein each one of the first block (412) and the second block (416) is an erase block, the erase block comprising one or more erasable entities of the flash memory (120) and comprising one or more write sectors, each write sector being a smallest writable entity of the flash memory (120).

5. The electronic storage system (100) according to claim 4, wherein the flash memory (120) comprises a set of primary erase blocks (421, 422, 423, 424) and a set of backup erase blocks (425, 426, 427, 428); and
the electronic storage system (100) is configured to:
store a primary version (S2p) of the first data portion in a first primary erase block (422);
store a primary version (S6p) of the second data portion in a second primary erase block (424), the first primary erase block (422) and the second primary erase block (424) being non-contiguous erase blocks;
store a backup version (S2b) of the first data portion in a first backup erase block (426); and
store a backup version (S6b) of the second data portion in a second backup erase block (428), the first backup erase block (426) and the second backup erase block (428) being non-contiguous erase blocks.

6. The electronic storage system (100) according to claim 5, wherein the electronic storage system (100) is configured to:
erase the backup version (S2b) of the first data portion and the backup version (S6b) of the second data portion;
write an updated backup version (S2b') of the first data portion in a write sector (412b) of the first backup erase block (426), and an updated backup version (S6b') of the second data portion in a write sector (416b) of the second backup erase block (428);
erase the primary version (S2p) of the first data portion and the primary version (S6p) of the second data portion;
copy the updated backup version (S2b') of the first data portion from the first backup erase block (426) to a write sector (412p) of the first primary erase block (422) as an updated primary version (S2p') of the first data portion, and the updated backup version (S6b') of the second data portion from the second backup erase block (428) to a write sector (416p) of the second primary erase block (424) as an updated primary version (S6p') of the second data portion.

7. The electronic storage system (100) according to any one of the preceding claims, wherein
the update comprises an update of data portions (311, 312, 315, 316) stored in two or more blocks (411, 412, 415, 416) of the flash memory (120), including the first block (412) and the second block (416), in the single storage system operation; such that
the update of the data portions (311, 312, 315, 316) stored in the two or more blocks (411, 412, 415, 416) is performed in a power loss proof way, and write updated data portions in multiple write sectors of an erase block of the flash memory (120) before erasing the erase block, and use a sector sequence number for each write sector of the flash memory (120).

8. The electronic storage system (100) according to any one of the preceding claims, wherein the electronic storage system (100) is configured to:
level a number of erases across blocks (411, 412, 413, 414, 415, 415, 417) of the flash memory (120).

9. The electronic storage system (100) according to any one of the preceding claims, wherein the first block (412) and the second block (416) are non-contiguous blocks in respect of a logical data structure of the flash memory (120).

10. An embedded device (180) comprising:
an electronic storage system (100) according to any one of the preceding claims;
a flash memory (120); and
an application (110) configured to utilize the electronic storage system (100) for storing data in the flash memory (120).

11. A method (200) for an electronic storage system (100) for controlling a flash memory (120), the method (200) comprises:
storing data portions (FN, S1, S2, S3, S4, S5, S6, S7) of a data object (300) in multiple blocks (410, 411, 412, 413, 414, 415, 416, 417) of the flash memory (120); wherein
a first data portion (312) is a first data portion (S2) of a data object (300); and
a second data portion (316) is a second data portion (S6) of the data object (300); receiving (202) an update request (111) associated with at least the first data portion (312) stored in a first block (412) of the flash memory (120) and the second data portion (316) stored in a second block (416) of the flash memory (120); and is **characterised by**
updating (204), based on the update request (111), the first data portion (312) stored in the first block (412) and the second data portion (316) stored in the second block (413) in one storage system operation, without updating data portions (313, 314, 315) stored in one or more blocks in between the first block (412) and the second block (416).

12. A computer program with a program code for performing a method according to claim 11 when the computer program runs on a computer.

## Patentansprüche

1. Elektronisches Speichersystem (100) zum Steuern eines Flash-Speichers (120), wobei das elektronische Speichersystem (100) dazu konfiguriert ist:
Datenabschnitte (FN, S1, S2, S3, S4, S5, S6, S7) eines Datenobjekts (300) in mehreren Blöcken (410, 411, 412, 413, 414, 415, 416, 417) des Flash-Speichers (120) zu speichern; wobei
ein erster Datenabschnitt (312) ein erster Datenabschnitt (S2) des Datenobjekts (300) ist; und
ein zweiter Datenabschnitt (316) ein zweiter Datenabschnitt (S6) des Datenobjekts (300) ist;
eine Aktualisierungsanforderung (111) zu empfangen, die mindestens dem ersten Datenabschnitt (312), der in einem ersten Block (412) des Flash-Speichers (120) gespeichert ist, und dem zweiten Datenabschnitt (316), der in einem zweiten Block (416) des Flash-Speichers (120) gespeichert ist, zugeordnet ist; und **gekennzeichnet ist durch**
Aktualisieren des ersten Datenabschnitts (312), der in dem ersten Block (412) gespeichert ist, und des zweiten Datenabschnitts (316), der in dem zweiten Block (416) gespeichert ist, basierend auf der Aktualisierungsanforderung (111) in einem einzigen Speichersystemvorgang, ohne Aktualisieren von Datenabschnitten (313, 314, 315), die in einem oder mehreren Blöcken zwischen dem ersten Block (412) und dem zweiten Block (416) gespeichert sind.

2. Elektronisches Speichersystem (100) nach Anspruch 1, wobei der erste Datenabschnitt (312) und der zweite Datenabschnitt (316) voneinander abhängige Informationen umfassen.

3. Elektronisches Speichersystem (100) nach Anspruch 1 oder 2, wobei das elektronische Speichersystem (100) dazu konfiguriert ist:
die Aktualisierungsanforderung (111) in einem Aufruf der Speichersystemschnittstelle aus einer Anwendung (110) zu empfangen; und
die Aktualisierungsanforderung (111) in zwei oder mehreren Aufrufen der Speichersystemschnittstelle aus einer Anwendung (110) zu empfangen.

4. Elektronisches Speichersystem (100) nach einem der vorhergehenden Ansprüche, wobei das elektronische Speichersystem (100) eine Speichersystemschnittstelle (135, 145) umfasst, wobei die Speichersystemschnittstelle (135, 145) einen ersten Zeiger auf den ersten Block (412) und einen zweiten Zeiger auf den zweiten Block (416) umfasst, wobei jeder von dem ersten Block (412) und dem zweiten Block (416) ein Löschblock ist, wobei der Löschblock eine oder mehrere löschbare Einheiten des Flash-Speichers (120) umfasst und einen oder mehrere Schreibsektoren umfasst, wobei jeder Schreibsektor eine kleinste beschreibbare Einheit des Flash-Speichers (120) ist.

5. Elektronisches Speichersystem (100) nach Anspruch 4, wobei der Flash-Speicher (120) einen Satz von primären Löschblöcken (421, 422, 423, 424) und einen Satz von Sicherungslöschblöcken (425, 426, 427, 428) umfasst; und
das elektronische Speichersystem (100) dazu konfiguriert ist:
eine primäre Version (S2p) des ersten Datenabschnitts in einem ersten primären Löschblock (422) zu speichern;
eine primäre Version (S6p) des zweiten Datenabschnitts in einem zweiten primären Löschblock (424) zu speichern, wobei der erste primäre Löschblock (422) und der zweite primäre Löschblock (424) nicht zusammenhängende Löschblöcke sind;
eine Sicherungsversion (S2b) des ersten Datenabschnitts in einem ersten Sicherungslöschblock (426) zu speichern; und
eine Sicherungsversion (S6b) des zweiten Datenabschnitts in einem zweiten Sicherungslöschblock (428) zu speichern, wobei der erste Sicherungslöschblock (426) und der zweite Sicherungslöschblock (428) nicht zusammenhängende Löschblöcke sind.

6. Elektronisches Speichersystem (100) nach Anspruch 5, wobei das elektronische Speichersystem (100) dazu konfiguriert ist:
die Sicherungsversion (S2b) des ersten Datenabschnitts und die Sicherungsversion (S6b) des zweiten Datenabschnitts zu löschen;
eine aktualisierte Sicherungsversion (S2b') des ersten Datenabschnitts in einen Schreibsektor (412b) des ersten Sicherungslöschblocks (426) und eine aktualisierte Sicherungsversion (S6b') des zweiten Datenabschnitts in einen Schreibsektor (416b) des zweiten Sicherungslöschblocks (428) zu schreiben;
die primäre Version (S2p) des ersten Datenabschnitts und die primäre Version (S6p) des zweiten Datenabschnitts zu löschen;
die aktualisierte Sicherungsversion (S2b') des ersten Datenabschnitts aus dem ersten Sicherungslöschblock (426) in einen Schreibsektor (412p) des ersten primären Löschblocks (422) als aktualisierte primäre Version (S2p') des ersten Datenabschnitts und die aktualisierte Sicherungsversion (S6b') des zweiten Datenabschnitts aus dem zweiten Sicherungslöschblock (428) in einen Schreibsektor (416p) des zweiten primären Löschblocks (424) als aktualisierte primäre Version (S6p') des zweiten Datenabschnitts zu kopieren.

7. Elektronisches Speichersystem (100) nach einem der vorhergehenden Ansprüche, wobei
die Aktualisierung eine Aktualisierung von Datenabschnitten (311, 312, 315, 316) umfasst, die in zwei oder mehr Blöcken (411, 412, 415, 416) des Flash-Speichers (120) gespeichert sind, die den ersten Block (412) und den zweiten Block (416) in dem einzelnen Speichersystemvorgang beinhaltet; derart, dass
die Aktualisierung der Datenabschnitte (311, 312, 315, 316), die in den zwei oder mehr Blöcken (411, 412, 415, 416) gespeichert sind, stromausfallsicher durchgeführt wird und aktualisierte Datenabschnitte in mehrere Schreibsektoren eines Löschblocks des Flash-Speichers (120) vor dem Löschen des Löschblocks geschrieben werden, und eine Sektorsequenznummer für jeden Schreibsektor des Flash-Speichers (120) verwendet wird.

8. Elektronisches Speichersystem (100) nach einem der vorhergehenden Ansprüche, wobei das elektronische Speichersystem (100) dazu konfiguriert ist:
eine Anzahl von Löschvorgängen über Blöcke (411, 412, 413, 414, 415, 415, 417) des Flash-Speichers (120) anzugleichen.

9. Elektronisches Speichersystem (100) nach einem der vorhergehenden Ansprüche, wobei der erste Block (412) und der zweite Block (416) nicht zusammenhängende Blöcke in Bezug auf eine logische Datenstruktur des Flash-Speichers (120) sind.

10. Eingebettete Vorrichtung (180), umfassend:
ein elektronisches Speichersystem (100) nach einem der vorhergehenden Ansprüche;
einen Flash-Speicher (120); und
eine Anwendung (110), die dazu konfiguriert ist, das elektronische Speichersystem (100) zum Speichern von Daten in dem Flash-Speicher (120) zu nutzen.

11. Verfahren (200) für ein elektronisches Speichersystem (100) zum Steuern eines Flash-Speichers (120), wobei das Verfahren (200) Folgendes umfasst:
Speichern von Datenabschnitten (FN, S1, S2, S3, S4, S5, S6, S7) eines Datenobjekts (300) in mehreren Blöcken (410, 411, 412, 413, 414, 415, 416, 417) des Flash-Speichers (120); wobei
ein erster Datenabschnitt (312) ein erster Datenabschnitt (S2) eines Datenobjekts (300) ist; und
ein zweiter Datenabschnitt (316) ein zweiter Datenabschnitt (S6) des Datenobjekts (300) ist;
Empfangen (202) einer Aktualisierungsanforderung (111), die mindestens dem ersten Datenabschnitt (312), der in einem ersten Block (412) des Flash-Speichers (120) gespeichert ist, und dem zweiten Datenabschnitt (316), der in einem zweiten Block (416) des Flash-Speichers (120) gespeichert ist, zugeordnet ist; und
**gekennzeichnet ist durch**
Aktualisieren (204) des ersten Datenabschnitts (312), der in dem ersten Block (412) gespeichert ist, und des zweiten Datenabschnitts (316), der in dem zweiten Block (413) gespeichert ist, basierend auf der Aktualisierungsanforderung (111) in einem Speichersystemvorgang, ohne Aktualisieren von Datenabschnitten (313, 314, 315), die in einem oder mehreren Blöcken zwischen dem ersten Block (412) und dem zweiten Block (416) gespeichert sind.

12. Computerprogramm mit einem Programmcode zum Durchführen eines Verfahrens nach Anspruch 11, wenn das Computerprogramm auf einem Computer ausgeführt wird.

## Revendications

1. Système de stockage électronique (100) destiné à contrôler une mémoire flash (120), le système de stockage électronique (100) étant configuré pour :
stocker des portions de données (FN, S1, S2, S3, S4, S5, S6, S7) d'un objet de données (300) dans plusieurs blocs (410, 411, 412, 413, 414, 415, 416, 417) de la mémoire flash (120) ; dans lequel une première portion de données (312) est une première portion de données (S2) de l'objet de données (300) ; et
une seconde portion de données (316) est une seconde portion de données (S6) de l'objet de données (300) ;
recevoir une demande de mise à jour (111) associée à au moins la première portion de données (312) stockée dans un premier bloc (412) de la mémoire flash (120) et la seconde portion de données (316) stockée dans un second bloc (416) de la mémoire flash (120) ; et est **caractérisé par**
la mise à jour, sur la base de la demande de mise à jour (111), de la première portion de données (312) stockée dans le premier bloc (412) et de la seconde portion de données (316) stockée dans le second bloc (416) en une seule opération de système de stockage, sans mise à jour des portions de données (313, 314, 315) stockées dans un ou plusieurs blocs entre le premier bloc (412) et le second bloc (416).

2. Système de stockage électronique (100) selon la revendication 1, dans lequel la première portion de données (312) et la seconde portion de données (316) comprennent des informations interdépendantes.

3. Système de stockage électronique (100) selon la revendication 1 ou 2, dans lequel le système de stockage électronique (100) est configuré pour :
recevoir la demande de mise à jour (111) en un seul appel d'interface de système de stockage en provenance d'une application (110) ; et
recevoir la demande de mise à jour (111) en deux appels d'interface de système de stockage ou plus en provenance d'une application (110).

4. Système de stockage électronique (100) selon l'une quelconque des revendications précédentes, dans lequel le système de stockage électronique (100) comprend une interface de système de stockage (135, 145), l'interface de système de stockage (135, 145) comprenant un premier pointeur vers le premier bloc (412) et un second pointeur vers le second bloc (416), dans lequel chacun du premier bloc (412) et du second bloc (416) est un bloc d'effacement, le bloc d'effacement comprenant une ou plusieurs entités effaçables de la mémoire flash (120) et comprenant un ou plusieurs secteurs d'écriture, chaque secteur d'écriture étant une entité inscriptible la plus petite de la mémoire flash (120).

5. Système de stockage électronique (100) selon la revendication 4, dans lequel la mémoire flash (120) comprend un ensemble de blocs d'effacement primaires (421, 422, 423, 424) et un ensemble de blocs d'effacement de sauvegarde (425, 426, 427, 428) ; et
le dispositif de stockage électronique (100) est configuré pour :
stocker une version primaire (S2p) de la première portion de données dans un premier bloc d'effacement primaire (422) ;
stocker une version primaire (S6p) de la seconde portion de données dans un second bloc d'effacement primaire (424), le premier bloc d'effacement primaire (422) et le second bloc d'effacement primaire (424) étant des blocs d'effacement non contigus ;
stocker une version de sauvegarde (S2b) de la première portion de données dans un premier bloc d'effacement de sauvegarde (426) ; et
stocker une version de sauvegarde (S6b) de la seconde portion de données dans un second bloc d'effacement de sauvegarde (428), le premier bloc d'effacement de sauvegarde (426) et le second bloc d'effacement de sauvegarde (428) étant des blocs d'effacement non contigus.

6. Système de stockage électronique (100) selon la revendication 5, dans lequel le système de stockage électronique (100) est configuré pour :
effacer la version de sauvegarde (S2b) de la première portion de données et la version de sauvegarde (S6b) de la seconde portion de données ;
écrire une version de sauvegarde mise à jour (S2b') de la première portion de données dans un secteur d'écriture (412b) du premier bloc d'effacement de sauvegarde (426), et une version de sauvegarde mise à jour (S6b') de la seconde portion de données dans un secteur d'écriture (416b) du second bloc d'effacement de sauvegarde (428) ;
effacer la version primaire (S2p) de la première portion de données et la version primaire (S6p) de la seconde portion de données ;
copier la version de sauvegarde mise à jour (S2b') de la première portion de données du premier bloc d'effacement de sauvegarde (426) vers un secteur d'écriture (412p) du premier bloc d'effacement primaire (422) en tant que version primaire mise à jour (S2p') de la première portion de données, et la version de sauvegarde mise à jour (S6b') de la seconde portion de données du second bloc d'effacement de sauvegarde (428) vers un secteur d'écriture (416p) du second bloc d'effacement primaire (424) en tant que version primaire mise à jour (S6p') de la seconde portion de données.

7. Système de stockage électronique (100) selon l'une quelconque des revendications précédentes, dans lequel
la mise à jour comprend une mise à jour des portions de données (311, 312, 315, 316) stockées dans deux blocs (411, 412, 415, 416) ou plus de la mémoire flash (120), y compris le premier bloc (412) et le second bloc (416), au cours de l'opération unique de système de stockage ; de sorte que
la mise à jour des portions de données (311, 312, 315, 316) stockées dans les deux blocs (411, 412, 415, 416) ou plus est effectuée de manière à résister aux pertes de courant, et à écrire les portions de données mises à jour dans plusieurs secteurs d'écriture d'un bloc d'effacement de la mémoire flash (120) avant d'effacer le bloc d'effacement, et à utiliser un numéro de séquence de secteur pour chaque secteur d'écriture de la mémoire flash (120).

8. Système de stockage électronique (100) selon l'une quelconque des revendications précédentes, dans lequel le système de stockage électronique (100) est configuré pour :
égaliser un nombre d'effacements sur les blocs (411, 412, 413, 414, 415, 415, 417) de la mémoire flash (120).

9. Système de stockage électronique (100) selon l'une quelconque des revendications précédentes, dans lequel le premier bloc (412) et le second bloc (416) sont des blocs non contigus par rapport à une structure de données logique de la mémoire flash (120).

10. Dispositif embarqué (180) comprenant :
un système de stockage électronique (100) selon l'une quelconque des revendications précédentes ;
une mémoire flash (120) ; et
une application (110) configurée pour utiliser le système de stockage électronique (100) pour stocker des données dans la mémoire flash (120).

11. Procédé (200) pour un système de stockage électronique (100) destiné à contrôler une mémoire flash (120), le procédé (200) comprend :
le stockage de portions de données (FN, S1, S2, S3, S4, S5, S6, S7) d'un objet de données (300) dans plusieurs blocs (410, 411, 412, 413, 414, 415, 416, 417) de la mémoire flash (120) ; dans lequel
une première portion de données (312) est une première portion de données (S2) d'un objet de données (300) ; et
une seconde portion de données (316) est une seconde portion de données (S6) de l'objet de données (300) ;
la réception (202) d'une demande de mise à jour (111) associée à au moins la première portion de données (312) stockée dans un premier bloc (412) de la mémoire flash (120) et la seconde portion de données (316) stockée dans un second bloc (416) de la mémoire flash (120) ; et est **caractérisé par**
la mise à jour (204), sur la base de la demande de mise à jour (111), de la première portion de données (312) stockée dans le premier bloc (412) et de la seconde portion de données (316) stockée dans le second bloc (413) en une opération de système de stockage, sans mise à jour des portions de données (313, 314, 315) stockées dans un ou plusieurs blocs entre le premier bloc (412) et le second bloc (416).

12. Programme informatique avec un code de programme pour exécuter un procédé selon la revendication 11 lorsque le programme informatique s'exécute sur un ordinateur.
